Europäisches Patentamt

European Patent Office

Office européen des brevets

(11) Publication number: **0 462 965 B1**

## EUROPEAN PATENT SPECIFICATION

(45) Date of publication of patent specification: **27.04.94** (51) Int. Cl.⁵: **G01G  19/10**, G01G 5/04, E02F 9/26

(21) Application number: **89906538.7**

(22) Date of filing: **09.05.89**

(86) International application number:
**PCT/US89/01972**

(87) International publication number:
**WO 90/10850 (20.09.90 90/22)**

(54) **DYNAMIC PAYLOAD MONITOR.**

(30) Priority: **15.03.89 US 324517**

(43) Date of publication of application:
**02.01.92 Bulletin  92/01**

(45) Publication of the grant of the patent:
**27.04.94 Bulletin  94/17**

(84) Designated Contracting States:
**BE DE FR GB IT SE**

(56) References cited:
**EP-A- 0 110 399          EP-A- 0 129 422**
**DE-A- 2 312 006          FR-A- 2 390 366**
**US-A- 4 054 055          US-A- 4 230 196**
**US-A- 4 792 004**

**Patent Abstracts of Japan, vol. 8, no. 175 (P-294)(1612), 11 August 1984, & JP-A-5970919**

(73) Proprietor: **CATERPILLAR INC.**
**100 Northeast Adams Street**
**Peoria Illinois 61629-6490(US)**

(72) Inventor: **KYRTSOS, Christos, T.**
**3808 Walround Lane**
**Peoria, IL 61615(US)**
Inventor: **WORRELL, Dean, A.**
**5616 N. Monterey Court**
**Peoria, IL 61614(US)**

(74) Representative: **Brunner, Michael John et al**
**GILL JENNINGS & EVERY**
**Broadgate House**
**7 Eldon Street**
**London EC2M 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates generally to a hydraulically operated vehicle for transferring of bulk material and more particularly, to an apparatus and method for weighing and indicating the weight of the bulk material being transferred.

Hydraulically operated vehicles such as loaders are used generally to transfer bulk material from a stock pile onto a transport vehicle such as trucks or railroad cars. In such vehicle loading applications, it is essential that the transport vehicles are loaded to, but not over, their maximum rated legal capacity. Underloading causes inefficiency in the material hauling cycle and underutilization of the transport vehicles. The penalty for overloading a truck is the additional maintenance cost for the overburden and extra wear on the truck tires and suspension system. Furthermore, the overloaded material may need to be unloaded to decrease load weight, causing additional expense to the hauling operation.

It is easily recognized that payload measurement is also desirable as a measure of the material hauling operation productivity. The ability to accumulate the weight of the material loaded during a single shift, during a twenty-four hour period, or during any increment of time is invaluable to an operations manager.

A number of payload measuring devices have been developed. One such device is described in U.S. Patent No. 4,230196 issued to Snead on October 28, 1980. Snead discloses a load weighing and accumulating system for a loader. Snead's device includes a pressure sensor for detecting the hydraulic pressure in the lift cylinder of the loader, and a lift arm alignment member as a visual aid to the operator to position the lift arm at a predetermined weighing location. To measure the load present in the loader bucket, the operator is to obtain the load, position the lift arm by visually aligning the alignment members on the lift arm and the vehicle frame, at which time (within a $\frac{1}{2}$ second time period) the load is weighed. This device has several disadvantages. The number of data sampled in $\frac{1}{2}$ second is insufficient, resulting in extremely inaccurate measurements. This consideration is especially significant when the vehicle is operating over rough terrain. The lift cylinder pressure rises and peaks when the vehicle hits a bump, and subsequently the pressure sharply drops off as the vehicle experiences "free fall" as it clears the bump. The same sharp pressure rise and fall occur when the vehicle encounters a surface depression, except the pressure first decreases then increases. In a typical loader operation environment, the ground surface is bumpy at best. The Snead device requires that the vehicle dynamics is at a steady state when the data sampling is taking place, which is not possible when the vehicle is traveling. Its accuracy is severely compromised because of its small data sampling window. The Snead device also requires that the operator maintains the position of the lift arm while measurement is taking place. This requirement has two implications. Because the cylinder pressure can vary over a large range depending on the lift arm position, if the operator had neglected the alignment requirement or had misaligned the lift arm, the resultant payload measurement may be grossly erroneous. Typically, the loader transfers material over a short distance from the pile to the transport vehicle. In the time it takes to travel from the pile to the transport vehicle, the operator must rack back the bucket to maintain the material in the bucket, raise the lift arm to a substantially fully raised position to dump the load. The above operations are most often performed continuously without breaking the established pace. In requiring the operator to stop the lift arm and position it with the alignment members, the operator's pace is interrupted, and the vehicle may very well have arrived at the transport vehicle before the lift arm is fully extended.

Another device, disclosed in U.S. Patent No. 4,055,255, issued to Vasquez on October 25, 1977, describes an apparatus and method for carrying and delivering payload of a predetermined weight. Vasquez senses hydraulic pressure in the cylinder supporting the bucket. Because of the peculiar configuration of the vehicle implement linkage, the lift cylinder of the bucket is generally upright when the bucket is not lowered to obtain a load. This device cannot be installed on typical loader vehicles which have a vastly different linkage configuration than the vehicle Vasquez describes. Therefore, it is a special application payload weighing device not suitable for usage on existing loaders.

The above identified payload measurement devices and others in the field are inadequate for the intended application and the type of the loader vehicle. The present invention is directed to overcome the problems and have the desirable characteristics as set forth above.

EP-A1-110399 discloses a load weight indicating system for load moving machinery such as excavators and the like.

The object of the invention is to avoid the disadvantages of the known payload measurement systems and to provide a payload monitor that is accurate, its usage does not alter or interfere with the operator's loading operation, and is installable on existing or new loaders without linkage reconfiguration.

According to the present invention, there is provided an apparatus for dynamically measuring and indicating payload weight for a vehicle having at least one implement linkage, and at least one cylinder for modifying the geometry of the implement linkage, the apparatus comprising:

means for delivering a first signal in response to sensing the hydraulic pressure of the cylinder; means for delivering a second signal in response to the implement linkage geometry; and

means for producing a reference payload parabolic curve and for receiving the first and second signals and responsively producing an actual payload parabolic curve and for comparing the reference and actual parabolic curves and responsibly deriving payload weight. Furthermore a corresponding method - claim 12 - is provided.

For a better understanding of the present invention, reference may be made to the accompanying drawings, in which:

Fig. 1 is a side view of the forward portion of a loader vehicle;

Fig. 2 is a functional block diagram of the present invention;

Fig. 3 is a cylinder pressure versus cylinder extension graph;

Fig. 4 is a state transition diagram of the system;

Fig. 5 is a flow chart of the calibration portion of the algorithm;

Fig. 6 is a flow chart of the computation portion of the algorithm.

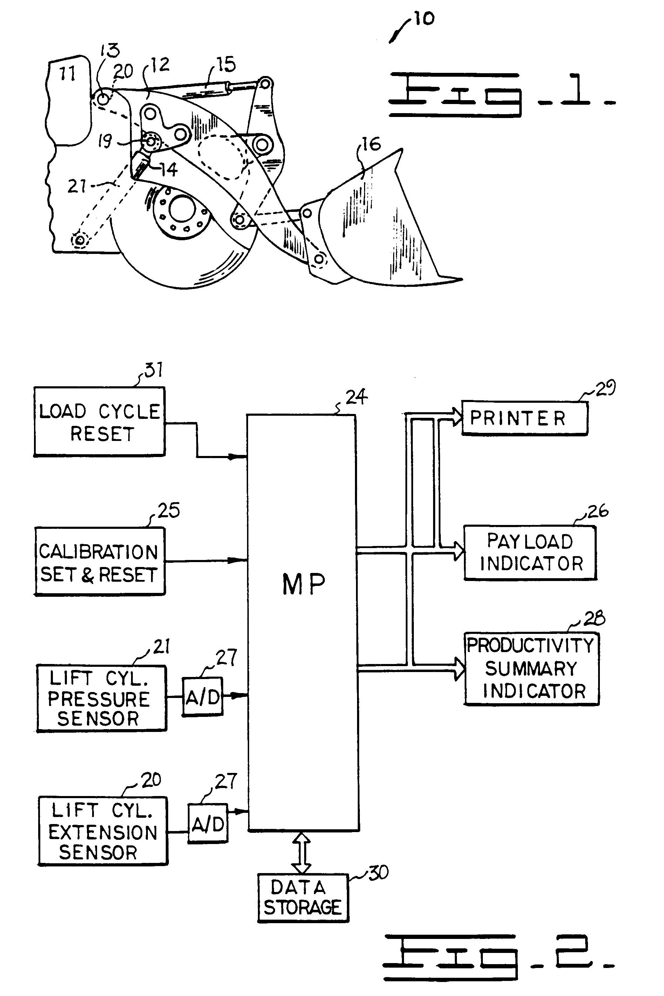

Although Fig. 1 shows a forward portion of a wheel type loader vehicle 11 with a payload carrier 16, the present invention is equally applicable to vehicles such as track type loaders, and vehicles having similar loading implements. The lift arm assembly 12 are pivotally actuated by two hydraulic lift cylinders 14 (only one of which is shown) about a pair of lift arm pivot pins 13 (only one shown) attached to the vehicle frame. A pair of lift arm load bearing pivot pins 19 is attached to the lift arms 12 and the lift cylinders 14. The preferred embodiment includes a rotary sensor 20 sensing the rotation of one of the lift arm pivot pins 13 from which the geometry of the lift arm assembly 12 or the extension of the lift cylinders 14 can be derived. The same rotary sensor 20 can be advantageously installed on the load bearing pivot pins 19 to sense the same. A pressure transducer 21 senses the hydraulic pressure in the lift cylinders 14. Although there are two lift cylinders 14, the pressure in the cylinders is the same for a given payload and given lift arm assembly geometry. Thus, sensing pressure at one of the cylinders is sufficient for the present application.

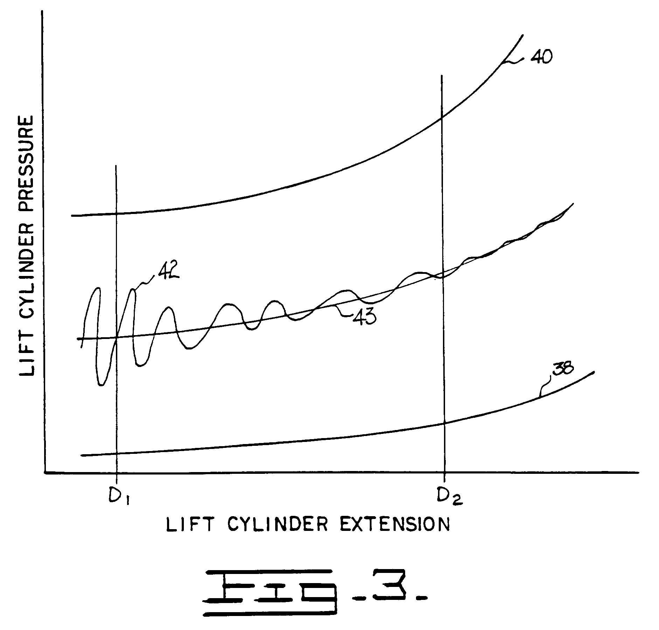

Referring to Fig. 2, the cylinder pressure and extension sensor signals are the inputs to a microprocessor 24 after processing by the A/D converters 27. A calibration set/reset control input 25 enables calibration of the payload monitoring system 10. The operator resets the calibration data and enters the calibration payload weight values at the calibration control input 25. A load cycle reset control unit 31 enables the operator to indicate the beginning and end of a load cycle for a specific transporting vehicle or dump site. The calibration control 25 and the load cycle reset control are preferably implemented in combination with the payload weight indicator 26 with a liquid crystal display screen (not shown) and an alphanumeric key pad (not shown). The indicator 26 displays the weight measured and any other weight data such as a productivity summary 28 of the loading operation of this loader vehicle 11. The preferred embodiment includes a printer 29 that produces hard copy reports, and capability to store information in a data storage unit 30 such as nonvolatile memory and a data disk drive.

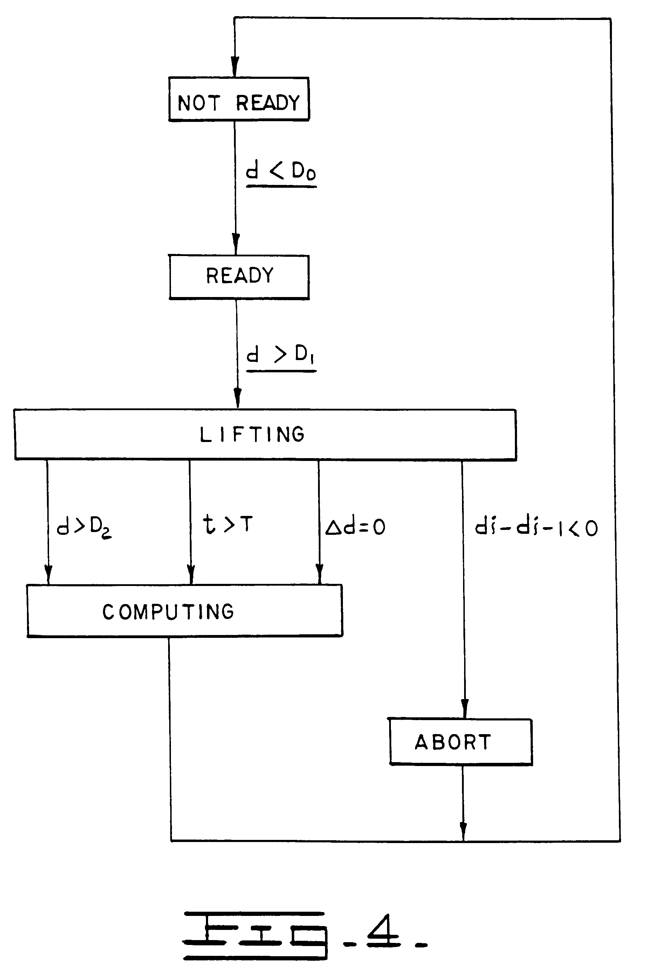

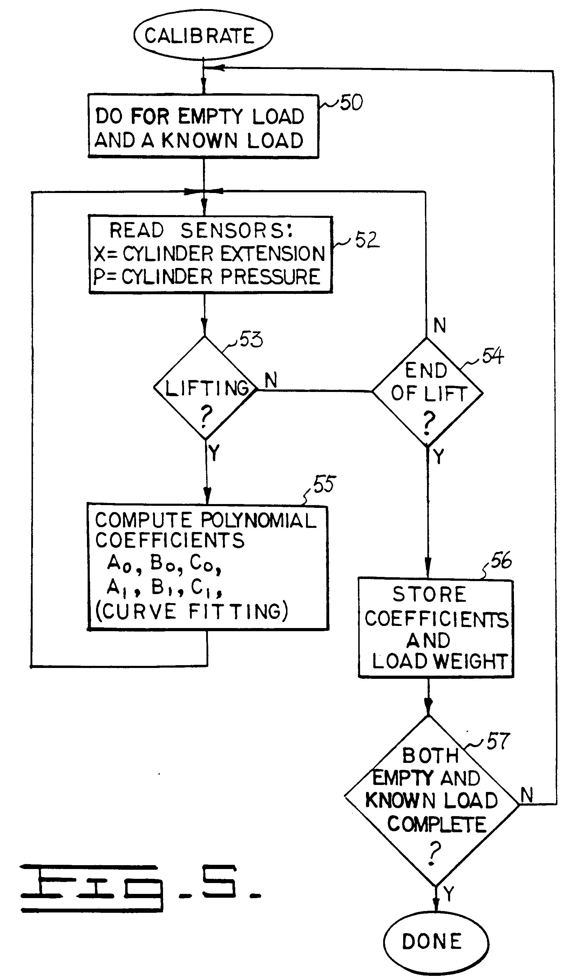

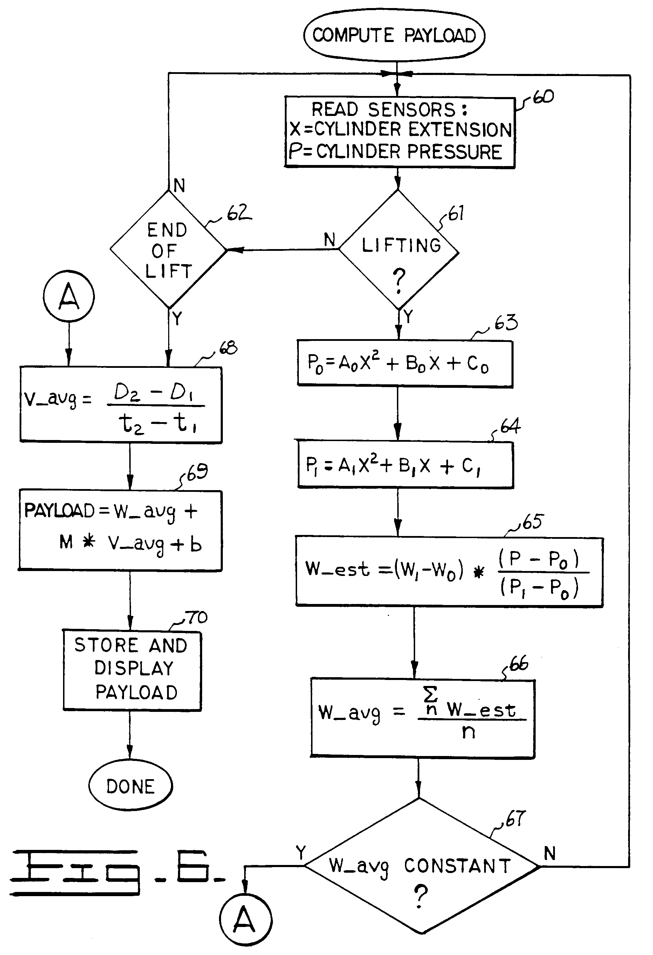

Fig. 3 illustrates the graphical representation of the present invention. The pressure and extension data is plotted on a graph having the lift cylinder pressure on the vertical Y-axis and the lift cylinder extension on the horizontal X-axis. A first parabolic curve 38 represents the curve fitted pressure versus extension data for an empty loader bucket 16. A second parabolic curve 40 represents the curve fitted pressure versus extension data for a payload of known weight. This known weight is preferably at or near the rated load capacity of the vehicle. The parabolas can be represented mathematically by second order polynomials. Curves 38,40 are sampled and stored as the reference weight curves for the system during the calibration portion (Fig. 5) of the algorithm. As shown in Fig. 3, the lift cylinder pressure increases as the cylinder extension increases, so that the measured weight is dependent on the geometry of the lift arm assembly as it is being raised from the ground to dump height. Because the loader is typically digging at the beginning of a work cycle and dumping at the end thereof where cylinder pressure varies drastically and the dynamic of the system is unstable, weight measurement is confined to a time period when the lift cylinder extension displacement is between D1 and D2, where D2 > D1. This ensures a set of usable sample data that accurately represents payload weight. Trace 42 represents the measuring load cylinder pressure versus extension plot. The random surges in the trace 42 denote the pressure variations in the lift cylinder during vehicle travel and directional changes. Curve 43, which is shown superimposed over trace 42, has been curve fitted and averaged to remove the random pressure surges. The smoothed parabola 43 is an accurate representation of the pressure versus extension of the weight being measured. Experimentation has shown that lift cylinder pressure varies linearly with the weight of the payload at a cylinder extension for a specific lift velocity. Therefore, the weight for the measuring payload can be calculated by interpolation if the curve 43 falls within the reference curves 38,40, and extrapolation if the curve 43 is outside of the reference curves 38,40.

Referring to Fig. 4, a state transition diagram of the present invention is shown. The present embodiment of the payload monitor 10 makes a transition from state NOT READY to READY when the lift cylinder extension is less than a first predetermined set point $D_0$ ($d < D_0$). When the displacement, d, is less than $D_0$, the payload carrier 16 is most probably digging or crowding a pile. When the displacement, d, is greater than another predetermined displacement set point $D_1$ ($d > D_1$), the vehicle is lifting the payload carrier 16, and the present state is LIFTING. During LIFTING, cylinder pressure and position data are sampled. Three conditions can cause state transition from LIFTING to COMPUTING. State transition occurs when cylinder extension exceeds another setpoint $D_2$ ($d > D_2$), signifying that the payload carrier has been raised and is approaching dump height. If after T seconds displacement $D_2$ still has not been reached ($t > T$), the system equally makes the same transition from LIFTING to COMPUTING. The third condition for the same transition is when the cylinder displacement, d, remains the same ($\Delta d = 0$). This condition denotes most load-and-carry operations where the loader vehicle performs additionally as the transport vehicle and travels to the destination with the bucket held at the same level. The payload weighing algorithm is aborted when the payload carrier is detected to have been lowered ($d_i - d_{i-1} < 0$). The values $D_0$, $D_1$, $D_2$, and T are determined according to the specific vehicle, and can be obtained by measurement and experimentation.

Keeping the state transition diagram of Fig. 4 in mind, now refer to Fig. 5 for the calibration flowchart. Calibration is done sequentially with both an empty and a known load as shown in block 50. The order of which either is performed is unimportant, but cylinder pressure and position data for both weight values must be sampled. In block 52, the cylinder pressure and position sensors are read. The LIFTING state flag is checked at this point 53, if the payload is being lifted, the polynomial coefficients, $A_0$, $B_0$, $C_0$, $A_1$, $B_1$, $C_1$, for that specific pressure and position sample are computed 55. This is the step where the sampled sensor data points are curve fitted to a second order polynomial. If the payload is not being lifted (LIFTING flag is false), then it is checked to see if END OF LIFT is true 54. This flag is true if any of the conditions for state transition from LIFTING to COMPUTING is true in Fig. 4. If the end of lift conditions are not met, the algorithm returns to block 52 to continuously read sensor inputs. Otherwise, in block 56, the coefficients are stored along with the payload weight, which is either zero for an empty bucket or nonzero for a known weight. Finally, a check is made to make certain that both empty and known payload weights are sampled for completing the calibration algorithm 57.

Referring to Fig. 6, the payload weight calculation method is disclosed. At this time the state for the system is LIFTING (refer back to Fig. 4). The work cylinder pressure and position sensors are read as shown in block 60. The LIFTING state flag is checked at this point in block 61. If the vehicle 11 is still lifting the payload carrier 16, the cylinder pressure $P_0$ for the empty payload carrier (zero payload weight) at that cylinder extension X is calculated by using coefficient values computed during calibration. Similarly, in the following block 64, the cylinder pressure $P_1$ for the known load at that cylinder extension X is computed. Next, the estimated payload weight W__est is calculated by using the following interpolate and extrapolate formula:

$$W\_est = (W_1 - W_0) * [(P - P_0)/(P_1 - P_0)]$$

where
  $W_1$ is the known payload weight,
  $W_0$ is the empty payload weight,
  P is the current sampled pressure,
  $P_1$ is pressure for the known load, and
  $P_0$ is pressure for the empty load.
All the values above are values for the measured extension X. Then an average W__avg is computed for all the estimated weight W__est as shown in block 66. If the average weight has remained virtually constant for a predetermined amount of time, there is no further advantage to prolong the sampling period. This provides another end-of-lift detection method. If, at block 61, it is detected that the LIFTING state flag is no longer true, then it is checked to see if END OF LIFT is true as shown in block 62. This flag is true if any of the conditions for state transition from LIFTING to COMPUTING is true in Fig. 4. If the end of lift conditions are not met, the algorithm returns to block 60 to continuously read sensor inputs. Otherwise, the average lift velocity V__avg is computed by dividing the distance the cylinder has extended by the amount of time it took. Since it has been shown that the cylinder pressure versus extension curves (or the payload weight derived thereof) have a linear relationship with respect to the lift velocity, i.e. the faster the lift, the higher the payload weight value, adjustments need to be made to compensate for the linear shift. In block 69, the computed payload weight is adjusted by a value according to the computed average velocity. The values m and b in

the linear equation

$$m * V\_avg + b$$

are derived experimentally. Thereafter, the computed payload value is stored and displayed. The payload values may also be used in computing productivity summaries, and accumulated for specific transport vehicles and dump sites.

Industrial Applicability

The operation of the present invention is best described in relation to its use in loading applications where knowledge of payload weight is important. This payload measurement system is also invaluable to operations where it is desirable to monitor loader vehicle productivity.

Prior to using the payload monitor, the system must be calibrated. Calibration must also be repeated whenever there has been a change in the lift arm assembly configuration, such as switching to a different bucket or a substantial overhaul of any of the lift arm assembly subsystem. Calibration of the payload monitor includes lifting the lift arm assembly from ground level to dump level with an empty bucket, entering the payload weight, and repeating the procedure with material of a known weight in the bucket. Preferably, the known weight is near or at the rated capacity of the loader vehicle. The bucket should be racked back during the lifting process to ensure the center of gravity (C.G.) of the payload weight remains near the center of the bucket. The racked back bucket constraint may be removed by including a position sensor in the tilt cylinder to sense the degree of bucket tilt to compensate for the C.G. shift.

A typical work cycle of a loader includes, sequentially: digging and/or crowding a stock pile, racking back the bucket to maintain load, reversing and backing out of the pile while raising the bucket, traveling to a dump site or a transport vehicle while continuously raising the bucket, and finally dumping the load at a raised position. This loading cycle is not interrupted by the usage of the dynamic payload monitor, because stopping the vehicle is not required and the bucket is not required to be positioned at a specific height for a period of time. The operator simply resets the load cycle and enter the assigned dump vehicle or site number if such function is desired and proceeds to load and dump following a normal work cycle. In addition, productivity summaries and hard copies of such and other payload information may be obtained from the system. The payload data may also be downloaded to a data disk for storage or for analysis in an office setting.

The present invention is also expandable to other vehicles with different linkage configuration by compensating for the difference thereof. Anticipated applicable vehicle types are excavators, front shovels, backhoe loaders, and any vehicles having at least one linkage with at least one hydraulic cylinder for effecting that linkage. For these vehicle linkage configurations, additional pressure and position sensors are needed to detect cylinder pressure and the exact linkage geometry during the work cycle. However, the basic payload weight calculation remains the same by using curve fitting methods and two reference weight parabolas.

**Claims**

1. An apparatus (10) for dynamically measuring and indicating payload weight for a vehicle (11) having at least one implement linkage (12), and at least one cylinder (14) for modifying the geometry of the implement linkage (12), the apparatus (20) comprising:
   means (21) for delivering a first signal in response to sensing the hydraulic pressure of the cylinder (14);
   means (20) for delivering a second signal in response to the implement linkage geometry; and
   means (24) for producing a reference payload parabolic curve and for receiving the first and second signals and responsively producing an actual payload parabolic curve and for comparing the reference and actual parabolic curves and responsibly deriving payload weight.

2. The apparatus (10) as set forth in claim 1, wherein the second signal represents the cylinder extension.

3. The apparatus (10) as set forth in claim 1, for use with an implement linkage (12) which includes a linkage connection pivot pin (13),
   the means (20) delivers the second signal in response to sensing rotation of the implement linkage (12) about the linkage connection pivot pin; and
   means (24) for deriving payload weight in response to the first and second signals,
   the payload weight deriving means (24) producing a second reference payload parabolic curve, receiving the first and second signals, and calculating an actual payload parabolic curve by interpolating between the first and second reference payload curves in response to the first signal value being within the area bounded by the reference payload curves, and by extrapolating beyond the first and second reference payload curves in response to the first signal value being outside of the area bounded by the reference payload curves.

4. The apparatus (10), as set forth in claim 3, wherein the payload weight deriving means (24) calculates the first and second reference payload curves in response to measuring respective first and second reference payload weights.

5. The apparatus (10), as set forth in claim 4, wherein the vehicle (11) includes a payload carrier (16), the first reference payload weight is the empty weight of the carrier (16) and the second reference payload weight is the weight of the carrier loaded (16) with a predetermined known mass.

6. The apparatus (10), as set forth in claim 3, wherein each of the payload curves is represented by a second order polynomial equation.

7. The apparatus (10) as set forth in claim 1, wherein the payload weight deriving means (24) produces a second reference payload parabolic curve, and calculates an actual payload parabolic curve by interpolating between the first and second reference payload curves in response to the first signal value being within the area bounded by the reference payload curves, and by extrapolating beyond the first and second reference payload curves in response to the first signal value being outside of the area bounded by the reference payload curves.

8. The apparatus (10), as set forth in claim 7, wherein the payload weight deriving means (24) calculates the first and second reference payload curves in response to measuring first and second reference payload weights.

9. The apparatus (10), as set forth in claim 8, wherein the vehicle (11) includes a payload carrier (16), the first reference payload weight is the empty weight of the carrier (16) and the second reference payload weight is the weight of the carrier (16) loaded with a predetermined known mass.

10. The apparatus (10), as set forth in claim 7, wherein each of the payload curves is represented by a second order polynomial equation.

11. The apparatus (10), as set forth in claim 10, wherein the payload weight deriving means (24) compensates for variable cylinder extension velocity by linearly shifting the second order polynomials.

12. A method for dynamically measuring and indicating payload weight for a vehicle (11) having at least one lift cylinder (14) for elevating a payload carrier (16), the vehicle (11) generally executing a work cycle including lifting the payload carrier (16), the method comprising the steps of: sensing (60) the lift cylinder hydraulic pressure during the work cycle; delivering (60) a plurality of first signals in response to the sensed pressure; sensing (60) the lift cylinder extension during the work cycle; delivering (60) a plurality of second signals in response to the sensed extension; deriving (65) a second order polynomial geometric representation (43) for the plurality of first and second signals; comparing (65) the geometric representation (43) to at least one other second order polynomial geometric representation (38,40) of a known reference payload weight; and calculating (66) an actual payload weight in response to the comparison.

13. A method, as set forth in claim 12, wherein the lift cylinder pressure and extension sensing steps are performed only during the payload lifting portion of the work cycle.

14. A method, as set forth in claim 12, wherein the polynomial is obtained by filtering (66) the first and second signals.

15. A method, as set forth in claim 12, wherein the geometric representation (38) of a known payload weight includes a second order polynomial derived from a plurality of first and second signals sensed during a lift of an empty payload carrier.

16. A method, as set forth in claim 15, wherein the geometric representation (40) of a known payload weight further includes another second order polynomial derived from a plurality of first and second signals sensed during a lift of a payload carrier having a predetermined known weight.

17. A method, as set forth in claim 16, wherein the comparing step (65) includes one of interpolation between and extrapolation beyond the empty payload carrier polynomial and the predetermined known weight payload carrier polynomial.

**18.** A method, as set forth in claim 12, wherein the vehicle (11) further includes a lift arm (12), the lift arm (12) being pivotally attached to the vehicle (11) by a rotatable pivot pin (13), whereby the lift cylinder extension sensing step includes sensing rotation about the rotatable pin (13).

**19.** A method, as set forth in claim 12, wherein the payload weight calculation step (69) includes compensating for variable cylinder extension velocity by linearly shifting the second order polynomials.

**20.** A method, as set forth in claim 17, wherein the comparing step interpolates between the empty and known payload polynomials in response to the first signal value being within the area bounded by the polynomials, and extrapolates beyond the polynomials in response to the first signal value being outside of the area bounded by the polynomials.

**Patentansprüche**

**1.** Eine Vorrichtung (10) zum dynamischen Messen und Anzeigen des Zuladungs- oder Nutzlastgewichtes für ein Fahrzeug (11) mit mindestens einer Arbeitsgeräteverbindung (12) und mindestens einem Zylinder (14) zum Modifizieren der Anordnung oder Geometrie der Arbeitsgeräteverbindung (12), wobei die Vorrichtung (10) folgendes aufweist:
Mittel (21) zum Liefern eines ersten Signals ansprechend auf das Abfühlen des hydraulischen Drucks des Zylinders (14);
Mittel (20) zum Liefern eines zweiten Signals ansprechend auf die Arbeitsgeräteverbindungs-Anordnung oder Geometrie; und
Mittel (24) zum Erzeugen einer parabolischen Bezugszuladungskurve und zum Empfangen der ersten und zweiten Signale und darauf ansprechend zum Erzeugen einer parabolischen, tatsächlichen oder Ist-Zuladungskurve und zum Vergleichen der parabolischen Bezugs- und Ist-Kurven und darauf ansprechend Ableiten des Zuladungsgewichtes.

**2.** Vorrichtung (10) nach Anspruch 1, wobei das zweite Signal die Zylinderausdehnung oder Ausfahrstellung darstellt.

**3.** Vorrichtung (10) nach Anspruch 1 zur Verwendung mit einer Arbeitsgeräteverbindung (12), die einen Verbindungsverbinderschwenkstift (13) aufweist, wobei die Mittel (20) das zweite Signal ansprechend auf das Abfühlen der Drehung der Arbeitsgeräteverbindung (12) um den Verbindungsverbinderschwenkstift liefert; und Mittel (24) zum Ableiten des Zuladungsgewichtes ansprechend auf die ersten und zweiten Signale, wobei die Zuladungsgewichtsableitmittel (24) eine zweite parabolische Bezugszuladungskurve erzeugen, die die ersten und zweiten Signale empfangen und eine parabolische Ist-Zuladungkurve berechnen durch Interpolieren zwischen den ersten und zweiten Bezugszuladungskurven ansprechend auf den ersten Signalwert, der sich innerhalb eines durch die Bezugszuladungskurven begrenzten Bereichs befindet und durch Extrapolieren über die ersten und zweiten Bezugszuladungkurven hinaus ansprechend darauf, daß der erste Signalwert außerhalb des durch die Bezugszuladungskurven begrenzten Bereichs liegt.

**4.** Vorrichtung (10) nach Anspruch 3, wobei die Zuladungsgewichtsableitmittel (24) die ersten und zweiten Bezugszuladungskurven berechnen ansprechend auf das Messen entsprechender erster und zweiter Bezugzuladungsgewichte.

**5.** Vorrichtung (10) nach Anspruch 4, wobei das Fahrzeug (11) einen Zuladungsträger (16) umfaßt, wobei das erste Bezugszuladungsgewicht das Leergewicht des Trägers (16) ist und das zweite Bezugszuladungsgewicht das Gewicht des Trägers (16) beladen mit einer vorbestimmten bekannten Masse ist.

**6.** Vorrichtung (10) nach Anspruch 3, wobei jede der Zuladungskurven durch eine Polynomgleichung der zweiten Ordnung dargestellt ist.

**7.** Vorrichtung (10) nach Anspruch 1, wobei die Zuladungsgewichtsableitmittel (24) eine zweite parabolische Bezugszuladungskurve erzeugt und eine parabolische, tatsächliche oder Ist-Zuladungskurve berechnet durch Interpolieren zwischen den ersten und zweiten Bezugszuladungskurven ansprechend darauf, daß der erste Signalwert innerhalb des durch die Bezugszuladungskurven begrenzten Bereichs liegt und durch Extrapolieren über die ersten und zweiten Bezugszuladungskurven hinaus ansprechend darauf, daß der erste Signalwert außerhalb des durch die Bezugszuladungskurven begrenzten Bereichs liegt.

**8.** Vorrichtung (10) nach Anspruch 7, wobei die Zuladungsgewichtsableitmittel (24) die ersten und zweiten Bezugszuladungskurven berechnen, ansprechend auf das Messen erster und zweiter Bezugszuladungsgewichte.

9. Vorrichtung (10) nach Anspruch 8, wobei das Fahrzeug (11) einen Zuladungträger (16) aufweist, wobei das erste Bezugszuladungsgewicht das Leergewicht des Trägers (16) ist und wobei das zweite Bezugszuladungsgewicht das Gewicht des Trägers (16) ist, der mit einer vorbestimmten bekannten Masse beladen ist.

10. Vorrichtung (10) nach Anspruch 7, wobei jede der Zuladungskurven durch eine Polynomgleichung der zweiten Ordnung dargestellt ist.

11. Vorrichtung (10) nach Anspruch 10, wobei die Zuladungsgewichtsableitmittel (24) die variable Zylinderausfahrgeschwindigkeit durch lineares Verschieben der Polynome der zweiten Ordnung kompensieren.

12. Verfahren zum dynamischen Messen und Anzeigen des Zuladungegewichtes für ein Fahrzeug (11) mit mindestens einem Hubzylinder (14) zum Heben eines Zuladungsträgers (16), wobei das Fahrzeug (11) im allgemeinen einen Arbeitszyklus durchführt, der das Heben des Zuladungsträgers (16) umfaßt, wobei das Verfahren die folgenden Schritte aufweist:
Abfühlen (60) des hydraulischen Drucks des Hubzylinders während des Arbeitszyklus;
Liefern (60) einer Vielzahl von ersten Signalen ansprechend auf den abgefühlten Druck;
Abfühlen (60) der Hubzylinderausdehnung oder Ausfahrstellung während des Arbeitszyklus;
Liefern (60) einer Vielzahl von zweiten Signalen ansprechend auf die abgefühlte Ausfahrstellung;
Ableiten (65) einer geometrischen Polynomdarstellung der zweiten Ordnung (43) für die Vielzahl der ersten und zweiten Signale;
Vergleichen (65) der geometrischen Darstellung (43) mit mindestens einer anderen geometrischen Polynomdarstellung der zweiten Ordnung (38, 40) eines bekannten Bezugszuladungsgewichtes; und
Berechnen (66) eines tatsächlichen oder Ist-Zuladungsgewichtes infolge des Vergleichs.

13. Verfahren nach Anspruch 12, wobei der Hubzylinderdruck und die Ausfahrabfühlschritte nur während des Zuladungshubabschnitts des Arbeitszyklus durchgeführt werden.

14. Verfahren nach Anspruch 12, wobei das Polynom erhalten wird durch Filtern (66) der ersten und zweiten Signale.

15. Verfahren nach Anspruch 12, wobei die geometrische Darstellung (38) eines bekannten Zuladungsgewichtes ein Polynom der zweiten Ordnung umfaßt, das aus einer Vielzahl von ersten und zweiten Signalen abgeleitet ist, die während eines Hebens eines leeren Zuladungsträgers abgefühlt wurden.

16. Verfahren nach Anspruch 15, wobei die geometrische Darstellung (40) eines bekannten Zuladungsgewichtes weiterhin ein Polynom der zweiten Ordnung aufweist, das von einer Vielzahl von ersten und zweiten Signalen abgeleitet wurde, die während des Hebens eines Zuladungssträgers mit einem vorbestimmten bekannten Gewicht abgefühlt wurden.

17. Verfahren nach Anspruch 16, wobei der Vergleichsschritt (65) entweder eine Interpolation zwischen den Polynomen des leeren Zuladungsträgers und des mit einem vorbestimmten bekannten Gewicht beladenen Zuladungsträgers, oder eine Extrapolation über die vorgeannnten Polynome hinaus aufweist.

18. Verfahren nach Anspruch 12, wobei das Fahrzeug (11) weiterhin einen Hubarm (12) aufweist, wobei der Hubarm (12) schwenkbar an dem Fahrzeug (11) befestigt ist durch einen drehbaren Schwenkstift (13), wobei der Hubzylinderausfahrabfühlschritt das Abfühlen der Drehung um den drehbaren Stift (13) umfaßt.

19. Verfahren nach Anspruch 12, wobei der Zuladungsberechnungschritt (69) das Kompensieren der variablen Zylinderausfahrgeschwindigkeit durch lineares Verschieben der Polynome der zweiten Ordnung umfaßt.

20. Verfahren nach Anspruch 17, wobei der Vergleichsschritt interpoliert zwischen den leeren und bekannten Zuladungspolynomen, und zwar ansprechend darauf daß der erste Signalwert innerhalb des Bereichs liegt, der durch die Polynome begrenzt wird, und über die Polynome hinaus extrapoliert ansprechend darauf, daß der erste Signalwert außerhalb des durch die Polynome begrenzten Bereichs liegt.

**Revendications**

1. Equipement (10) de mesure et d'affichage dynamiques du poids de la charge utile d'un véhicule (11) possédant au moins une articulation d'outil (12) et au moins un cylindre (14) servant à modifier la géométrie de l'articulation de l'outil (12), l'équipement (10) comprenant :
un moyen (21) pour fournir un premier signal en réponse à la détection de la pression hydraulique du cylindre (14);

un moyen (20) pour fournir un second signal en réponse à la géométrie de l'articulation d'outil; et

un moyen (24) pour fournir une courbe parabolique de référence de charge utile, pour recevoir le premier et le second signal, fournir en réponse une courbe parabolique de charge utile effective, pour comparer la courbe parabolique de référence et la courbe effective, et en réponse en calculer le poids de la charge utile.

2. Equipement (10) selon la revendication 1, dans lequel le second signal représente l'extension du cylindre.

3. Equipement (10) selon la revendication 1, destiné à être utilisé avec une articulation d'outil (12) qui comprend un niveau (13), le moyen (20) délivrant le second signal en réponse à la détection de la rotation de l'articulation d'outil (12) autour du niveau de liaison d'articulation; et

un moyen (24) pour calculer le poids de la charge utile en réponse au premier et au second signal,

le moyen (24) de calcul du poids de la charge utile fournissant une seconde courbe parabolique de référence de charge utile, recevant le premier et le second signal et calculant une courbe parabolique de charge utile effective par interpolation entre la première et la seconde courbe de référence de charge utile lorsque la première valeur du signal est située à l'intérieur de la zone délimitée par les courbes de référence de charge utile, et par extrapolation au-delà de la première et de la seconde courbe de référence de charge utile lorsque la première valeur du signal est située à l'extérieur de la zone délimitée par les courbes de référence de charge utile.

4. Equipement (10) selon la revendication 3, dans lequel le moyen (24) de dérivation du poids de la charge utile calcule la première et la seconde courbe de référence de charge utile en réponse à la mesure d'un premier et d'un second poids de référence de charge utile.

5. Equipement (10) selon la revendication 4, dans lequel le véhicule (11) comprend un dispositif de transport (16) de charge utile, le premier poids de référence de charge utile étant le poids à vide du dispositif de transport (16) et le second poids de référence de charge utile étant le poids du dispositif de transport (16) chargé d'une masse connue prédéterminée.

6. Equipement (10) selon la revendication 3, dans lequel chacune des courbes de charge utile est représentée par un polynôme du second degré.

7. Equipement (10) selon la revendication 1, dans lequel le moyen (24) de dérivation du poids de la charge utile fournit une seconde courbe parabolique de référence de charge utile et calcule une courbe parabolique effective de charge utile par interpolation entre la première et la seconde courbe de référence de charge utile lorsque la première valeur du signal est située à l'intérieur de la zone délimitée par les courbes de référence de charge utile, et par extrapolation au-delà de la première et de la seconde courbe de référence de charge utile lorsque la première valeur du signal est située à l'extérieur de la zone délimitée par les courbes de référence de charge utile.

8. Equipement (10) selon la revendication 7, dans lequel le moyen (24) de dérivation du poids de la charge utile calcule la première et la seconde courbe de référence de charge utile en réponse à la mesure d'un premier et d'un second poids de référence de charge utile.

9. Equipement (10) selon la revendication 8, dans lequel le véhicule (11) comprend un dispositif de transport (16) de charge utile, le premier poids de référence de charge utile étant le poids à vide du dispositif de transport (16) et le second poids de référence de charge utile étant le poids du dispositif de transport (16) chargé d'une masse connue prédéterminée.

10. Equipement (10) selon la revendication 7, dans lequel chacune des courbes de charge utile est représentée par un polynôme du second degré.

11. Equipement (10) selon la revendication 10, dans lequel le moyen (24) de dérivation de poids de charge utile compense les variations de la vitesse d'extension du cylindre en décalant linéairement les polynômes du second degré.

12. Procédé de mesure et d'affichage dynamique du poids de la charge utile d'un véhicule (11) possédant au moins un cylindre de levage (14) destiné à relever un dispositif de transport (16) de charge utile, le véhicule (11) exécutant généralement un cycle de travail comprenant le levage du dispositif de transport (16) de charge utile, le procédé comprenant les étapes de : détection (60) de la pression du cylindre hydraulique de levage pendant le cycle de travail; fourniture (60) de plusieurs premiers signaux en réponse à la pression détectée; détection (60) de l'extension du cylindre de levage pendant le cycle de travail; fourniture (60) de plusieurs seconds signaux en réponse à l'extension détectée; calcul (65) d'une représentation géométrique (43) d'un polynôme du second degré pour les ensembles de premiers et de seconds signaux; comparaison (65) de la représentation géométrique (43) à au moins une autre représentation géométrique (38, 40) d'un polynôme du second degré pour un poids de référence connu de charge utile; et calcul (66) d'un poids effectif de charge utile en réponse à la comparaison.

13. Procédé selon la revendication 12, dans lequel les étapes de détection de la pression et de l'extension du cylindre de levage sont effectuées uniquement pendant la partie levage de la charge utile du cycle de travail.

14. Procédé selon la revendication 12, dans lequel le polynôme est obtenu par filtration (66) des premiers et des seconds signaux.

15. Procédé selon la revendication 12, dans lequel la représentation géométrique (38) d'un poids connu de charge utile comprend un polynôme du second degré, calculé à partir de plusieurs ensembles de premiers et de seconds signaux détectés au cours du levage d'un dispositif de transport de charge utile vide.

16. Procédé selon la revendication 15, dans lequel la représentation géométrique (40) d'un poids connu de charge utile comprend un autre polynôme du second ordre calculé à partir de plusieurs ensembles de premiers et de seconds signaux détectés au cours du levage d'un dispositif de transport de charge utile possédant un poids connu prédéterminé.

17. Procédé selon la revendication 16, dans lequel l'étape de comparaison (65) inclut ou bien une interpolation entre le polynôme du dispositif de transport de charge utile vide et le polynôme du dispositif de transport de charge utile d'un poids connu prédéterminé, ou bien une extrapolation au-delà de ces deux polynômes.

18. Procédé selon la revendication 12, dans lequel le véhicule (11) comprend en outre un bras de levage (12), le bras de levage (12) étant fixé à pivotement au véhicule (11) par un pivot rotatif (13), tandis que l'étape de détection de l'extension du cylindre de levage inclut la détection de la rotation autour du pivot rotatif (13).

19. Procédé selon la revendication 12, dans lequel l'étape (69) de calcul du poids de la charge utile comprend une compensation des variations de la vitesse d'extension du cylindre par décalage linéaire des polynômes du second degré.

20. Procédé selon la revendication 17, dans lequel l'étape de comparaison effectue une interpolation entre le polynôme de charge utile vide et le polynôme de charge utile connue lorsque la valeur du premier signal est située à l'intérieur de la zone délimitée par les polynômes, et un extrapolation au-delà de ces polynômes lorsque la valeur du premier signal est située à l'extérieur de la zone délimitée par les polynômes.

Fig.1.

Fig.2.

_Fig. 3._

**NOT READY**

$d < D_0$

**READY**

$d > D_1$

**LIFTING**

$d > D_2$ $\quad$ $t > T$ $\quad$ $\Delta d = 0$ $\quad\quad$ $di - di-1 < 0$

**COMPUTING**

**ABORT**

$$\text{Fig} .4.$$

CALIBRATE

DO FOR EMPTY LOAD AND A KNOWN LOAD ~50

READ SENSORS:
X = CYLINDER EXTENSION
P = CYLINDER PRESSURE ~52

LIFTING ? ~53

END OF LIFT ? ~54

COMPUTE POLYNOMIAL COEFFICIENTS
$A_0, B_0, C_0,$
$A_1, B_1, C_1,$
(CURVE FITTING) ~55

STORE COEFFICIENTS AND LOAD WEIGHT ~56

BOTH EMPTY AND KNOWN LOAD COMPLETE ? ~57

DONE

Fig.5.

**COMPUTE PAYLOAD**

READ SENSORS : 60
X = CYLINDER EXTENSION
$P$ = CYLINDER PRESSURE

LIFTING ? 61

$P_0 = A_0 X^2 + B_0 X + C_0$ 63

$P_1 = A_1 X^2 + B_1 X + C_1$ 64

$W\_est = (W_1 - W_0) * \dfrac{(P - P_0)}{(P_1 - P_0)}$ 65

$W\_avg = \dfrac{\sum_n W\_est}{n}$ 66

$W\_avg$ CONSTANT ? 67

END OF LIFT 62

$V\_avg = \dfrac{D_2 - D_1}{t_2 - t_1}$ 68

$PAYLOAD = W\_avg + M * V\_avg + b$ 69

STORE AND DISPLAY PAYLOAD 70

**DONE**

Fig. 6.